# EUROPÄISCHE PATENTSCHRIFT

(11) **EP 3 927 772 B1**
(45) Veröffentlichungstag und Bekanntmachung des Hinweises auf die Patenterteilung: **12.04.2023**
(21) Anmeldenummer: 20704543.6
(22) Anmeldetag: 18.02.2020
(51) Int. Cl.: C08L 77/02, C08L 77/06, C08K 7/14

(54) **THERMOPLASTISCHE FORMMASSE**
THERMOPLASTIC MOULDING MATERIAL
MASSE THERMOPLASTIQUE À MOULER

(30) Priorität: 20.02.2019 EP 19158330
(43) Veröffentlichungstag der Anmeldung: 29.12.2021
(73) Patentinhaber: BASF SE, 67056 Ludwigshafen am Rhein (DE)
(72) Erfinder: CREMER, Jens, 67056 Ludwigshafen (DE); SPIES, Patrick, 67056 Ludwigshafen (DE)
(74) Vertreter: BASF IP Association
(86) Internationale Anmeldenummer: PCT/EP2020/054141
(87) Internationale Veröffentlichungsnummer: WO 2020/169547

(56) Entgegenhaltungen:
- EP-A1- 2 719 727
- US-A1- 2016 068 428

## Beschreibung

Die Erfindung betrifft die Verwendung spezieller Glasfasern zur Erhöhung der Schlagzähigkeit und/oder Bruchdehnung von Formkörpern aus thermoplastische Polyamide enthaltenden thermoplastischen Formmassen sowie entsprechende thermoplastische Formmassen, Verfahren zu ihrer Herstellung, ihre Verwendung und Fasern, Folien oder Formkörper aus der thermoplastischen Formmasse.

Es ist bekannt, die Schlagzähigkeit und/oder Bruchdehnung von Polyamiden durch Vermischen der Polyamide mit funktionalisierten Elastomeren zu erhöhen. Gleichzeitig können der Zugmodul und die Bruchspannung vermindert werden.

US 5,482,997 betrifft Polyamidzusammensetzungen, die zur Erhöhung der Schlagzähigkeit ein Elastomer enthalten, das gegenüber Polyamid reaktive Gruppen aufweist. Beispielsweise wird ein Ethylen-Propylen-Ethyliden-Norbornen-Terpolymer, das mit Maleinsäureanhydrid gepfropft ist, eingesetzt oder ein thermoplastisches Polymer, das hälftig auf Polypropylen und EPDM-Kautschuk, gepfropft mit Maleinsäureanhydrid, basiert.

US 5,602,200 beschreibt Polyamid/Polyolefin-Blends, die ein unmodifiziertes Polypropylen oder unmodifiziertes Polyethylen und gegebenenfalls zusätzlich ein mit Carbonsäure oder Maleinsäureanhydrid gepfropftes Ethylen-Propylen-Dien-Elastomer enthalten.

Blends aus Polyamid (PA) und Polyolefin-Elastomeren (POE) zeigen verbesserte Eigenschaften bezüglich Härte und Spannungs-/Dehnungs-Verhalten. Da die Kompatibilität von Polyamid und Polyolefin-Elastomeren eingeschränkt ist, werden häufig funktionalisierte Polyolefin-Elastomere eingesetzt, beispielsweise mit Maleinsäureanhydrid gepfropfte Polyolefin-Elastomere. Bei größeren Anteilen an Polyolefin-Elastomeren in den Blends kann die Kompatibilität nicht weiter durch Pfropfung mit Maleinsäureanhydrid verbessert werden, da die Anzahl reaktiver Endgruppen im Polyamid beschränkt sind.

Zudem ist der Einsatz spezieller Glasfasern in Polyamiden vorteilhaft, um eine hohe Steifigkeit, Reißfestigkeit und Schlagzähigkeit zu erreichen.

EP 2 703 436 A1 beschreibt Polyamid-Formmassen, die neben partikulären Füllstoffen hochfeste Glasfasern enthalten, die im Wesentlichen aus Siliciumdioxid, Aluminiumoxid und Magnesiumoxid aufgebaut sind. Bevorzugte Glasfasern enthalten wenigstens 5 Gew.-% Magnesiumoxid und höchstens 10 Gew.-% Calciumoxid.

EP 3 130 663 A1 betrifft verstärkte, insbesondere langglasfaserverstärkte Polyamide, die eine gute Mechanik und bessere Schwindung bei der Verarbeitung aufweisen. Die Polyamide enthalten spezielle Glasfasern aus 57,5 bis 59,5 Gew.-% SiO₂, 17 bis 20 Gew.-% Al₂O₃, 11 bis 13,5 Gew.-% CaO und 8,5 bis 12,5 Gew.-% MgO.

US 2016/068428 betrifft Glaszusammensetzungen und Glasfasern, die eine Zusammensetzung gemäß Anspruch 2 der vorliegenden Erfindung aufweisen. Die Glasfasern weisen eine Zugfestigkeit in dem in Anspruch 1 genannten Bereich auf und ein Zug-E-Modul, das über dem in Anspruch 1 genannten Modul liegt.

EP 2 719 727 A1 betrifft Polyamid-Formmassen mit hoher Schlagzähigkeit und hoher Bruchdehnung. Die Formmassen enthalten neben einem Polyamid und einem mit Maleinsäureanhydrid gepfropften Ethylen-Butylen-Copolymer auch 15 - 40 Gew.% Glasfasern. Es werden mit silanhaltigen Verbindungen beschichtete E-Glasfasern mit einem Filamentdurchmesser von 10 µm eingesetzt.

Aufgabe der Erfindung ist die Bereitstellung von thermoplastische Polyamide enthaltenden thermoplastischen Formmassen, die bei gleichzeitig hoher Steifigkeit und Festigkeit eine erhöhte Schlagzähigkeit und Bruchdehnung aufweisen.

Aufgabe der Erfindung ist zudem die Bereitstellung eines Additivs, das eine Erhöhung der Schlagzähigkeit und/oder Bruchdehnung von Formkörpern aus thermoplastische Polyamide enthaltenden thermoplastischen Formmassen erlaubt, wobei die Formmassen zusätzlich mindestens ein Elastomer enthalten.

Die Aufgabe wird erfindungsgemäß gelöst durch Verwendung von Glasfasern, welche eine Zugfestigkeit gemäß DIN ISO 527-5 von 86,0 bis 92,0 GPa, ein Zug-E-Modul gemäß DIN ISO 527-5 von 2600 bis 3200 MPa und einen Erweichungspunkt gemäß DIN ISO 7884-1 von 900 bis 950 °C aufweisen, vorzugsweise durch Verwendung von Glasfasern der Zusammensetzung
C1) 55,5 bis 62,0 Gew.-% SiO₂,
C2) 14,0 bis 18,0 Gew.-% Al₂O₃,
C3) 11,0 bis 16,0 Gew.-% CaO,
C4) 6,0 bis 10,0 Gew.-% MgO,
C5) 0 bis 4,0 Gew.-% weiterer Oxide,
wobei die Summe der Anteile aus C3) CaO und C4) MgO zwischen 17,0 und 24,0 Gew.-% liegt, und die Summe der Gewichtsprozente C1) bis C5) 100 Gew.-% beträgt,
zur Erhöhung der Schlagzähigkeit und/oder Bruchdehnung von Formkörpern aus thermoplastische Polyamide und Elastomere enthaltenden Formmassen.

Die Normen beziehen sich auf die 2019 gültige Norm.

Vorzugsweise enthalten die thermoplastischen Formmassen dabei mindestens ein Elastomer, ausgewählt aus
b1) Copolymeren von Ethylen mit mindestens einem Comonomer, ausgewählt aus C₃₋₁₂-Olefinen, C₁₋₁₂-Alkyl(meth)acrylaten, (Meth)acrylsäure, Maleinsäureanhydrid, als Komponente B1),
b2) Polyethylen oder Polypropylen als Komponente B2),
wobei Komponenten B1) und B2) auch zusätzlich mit Maleinsäureanhydrid gepfropft sein können.

Sie wird zudem gelöst durch eine thermoplastische Formmasse, enthaltend
a) 30,0 bis 89,0 Gew.-% mindestens eines thermoplastischen Polyamids als Komponente A),
b) 1,0 bis 30,0 Gew.-% mindestens eines Elastomers als Komponente B), ausgewählt aus
   b1) Copolymeren von Ethylen mit mindestens einem Comonomer, ausgewählt aus C₃₋₁₂-Olefinen, C₁₋₁₂-Alkyl(meth)acrylaten, (Meth)acrylsäure, Maleinsäureanhydrid, als Komponente B1),
   b2) Polyethylen oder Polypropylen als Komponente B2),
   wobei Komponenten B1) und B2) auch zusätzlich mit Maleinsäureanhydrid gepfropft sein können,
c) 10,0 bis 69,0 Gew.-% Glasfasern, welche eine Zugfestigkeit gemäß DIN ISO 527-5 von 86,0 bis 92,0 GPa, ein Zug-E-Modul gemäß DIN ISO 527-5 von 2600 bis 3200 MPa und einen Erweichungspunkt gemäß DIN ISO 7884-1 von 900 bis 950 °C aufweisen, als Komponente C),
d) 0 bis 30,0 Gew.-% weiterer Zusatzstoffe und Verarbeitungshilfsmittel als Komponente D),
wobei die Summe der Gewichtsprozente der Komponenten A) bis D) 100 Gew.-% ergibt,
vorzugsweise durch eine thermoplastische Formmasse, enthaltend
a) 30,0 bis 89,0 Gew.-% mindestens eines thermoplastischen Polyamids als Komponente A),
b) 1,0 bis 30,0 Gew.-% mindestens eines Elastomers als Komponente B), ausgewählt aus
   b1) Copolymeren von Ethylen mit mindestens einem Comonomer, ausgewählt aus C₃₋₁₂-Olefinen, C₁₋₁₂-Alkyl(meth)acrylaten, (Meth)acrylsäure, Maleinsäureanhydrid, als Komponente B1),
   b2) Polyethylen oder Polypropylen als Komponente B2),
   wobei Komponenten B1) und B2) auch zusätzlich mit Maleinsäureanhydrid gepfropft sein können,
c) 10,0 bis 69,0 Gew.-% mindestens einer Glasfaser, der Zusammensetzung
   C1) 55,5 bis 62,0 Gew.-% SiO₂,
   C2) 14,0 bis 18,0 Gew.-% Al₂O₃,
   C3) 11,0 bis 16,0 Gew.-% CaO,
   C4) 6,0 bis 10,0 Gew.-% MgO,
   C5) 0 bis 4,0 Gew.-% weiterer Oxide,
   wobei die Summe der Anteile aus C3) CaO und C4) MgO zwischen 17,0 und 24,0 Gew.-% liegt, und die Summe der Gewichtsprozente C1) bis C5) 100 Gew.-% beträgt, als Komponente C),
d) 0 bis 30,0 Gew.-% weiterer Zusatzstoffe und Verarbeitungshilfsmittel als Komponente D), wobei die Summe der Gewichtsprozente der Komponenten A) bis D) 100 Gew.-% ergibt.

Die Aufgabe wird ferner gelöst durch ein Verfahren zur Herstellung einer derartigen thermoplastischen Formmasse durch Vermischen der Komponenten A) bis C) und gegebenenfalls D).

Die Aufgabe wird zudem gelöst durch Verwendung der thermoplastischen Formmassen durch Herstellung von Fasern, Folien und Formkörpern, durch die entsprechenden Fasern, Folien oder Formkörper und durch Verfahren zu ihrer Herstellung. Bevorzugt sind Formkörper.

Es wurde erfindungsgemäß gefunden, dass der Einsatz spezieller Glasfasern der vorstehenden Zusammensetzung zu einer Erhöhung der Schlagzähigkeit und/oder Bruchdehnung von Polyamidformmassen, insbesondere von Polyamid/Elastomer-Blends führen.

Dieser Effekt wird insbesondere bei Formkörpern aus thermoplastischen Formmassen beobachtet, die neben Polyamid mindestens ein Elastomer enthalten, ausgewählt aus
b1) Copolymeren von Ethylen mit mindestens einem Comonomer, ausgewählt aus C₃₋₁₂-Olefinen, C₁₋₁₂-Alkyl(meth)acrylaten, (Meth)acrylsäure, Maleinsäureanhydrid, als Komponente B1),
b2) Polyethylen oder Polypropylen als Komponente B2),
wobei Komponenten B1) und B2) auch zusätzlich mit Maleinsäureanhydrid gepfropft sein können.

Die Komponenten der erfindungsgemäßen thermoplastischen Formmassen werden nachstehend näher erläutert.

### Komponente A)

Als Komponente A) enthalten die thermoplastischen Formmassen 30,0 bis 89,0 Gew.-%, bevorzugt 43,0 bis 78,0 Gew.-%, vorzugsweise 52,0 bis 72,0 Gew.-%, insbesondere 56,5 bis 66,5 Gew.-%, mindestens eines thermoplastischen Polyamids.

Die Polyamide der erfindungsgemäßen Formmassen weisen im Allgemeinen eine Viskositätszahl von 90 bis 210, vorzugsweise 110 bis 160 ml/g auf, bestimmt in einer 0,5 gew.-%igen Lösung in 96,0 gew.-%iger Schwefelsäure bei 25 °C gemäß ISO 307.

Halbkristalline oder amorphe Harze mit einem Molekulargewicht (Gewichtsmittelwert) von mindestens 5.000, wie sie z. B. in den amerikanischen Patentschriften 2,071,250, 2,071,251, 2,130,523, 2,130,948, 2,241,322, 2,312,966, 2,512,606 und 3,393,210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10, Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 9, Kohlenstoffatomen sowie m-Xylylendiamin, Di-(4-aminophenyl)methan, Di-(4-amino-cyclohexyl)-methan, 2,2-Di-(4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95,0 Gew.-% an Caprolactam-Einheiten.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch so genannte Direktpolymerisation in Anwesenheit von Wasser, wie beispielsweise in der DE-A-10313681, EP-A-1 198 491 und EP 9 220 65 beschrieben.

Außerdem seien auch noch Polyamide erwähnt, die z. B. durch Kondensation von 1,4-Diaminobutan mit Adipinsäure unter erhöhter Temperatur erhältlich sind (Polyamid 4,6). Herstellungsverfahren für Polyamide dieser Struktur sind z. B. in den EP-A-38 094, EP-A-38 582 und EP-A-039 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Geeignete Polyamide haben vorzugsweise einen Schmelzpunkt von weniger als 265 °C.

Die nachfolgende nicht abschließende Aufstellung enthält die genannten, sowie weitere Polyamide im Sinne der Erfindung und die enthaltenen Monomeren.

AB-Polymere:
- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

AA/BB-Polymere:
- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA MXD6: m-Xylylendiamin, Adipinsäure
- PA 9T: Nonamethylendiamin, Terephthalsäure

AA/BB-Polymere:
- PA6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PAPACM 12: Diaminodicyclohexylmethan, Laurinlactam
- PA 6I/6T/PACMT: wie PA 6I/6T + Diaminodicyclohexylmethan, Terephthalsäure
- PA 6T/6I/MACMT: wie PA 6I/6T + Dimethyldiaminocyclohexylmethan, Terephthalsäure
- PA 6T/6I/MXDT: wie PA 6I/6T + m-Xylylendiamin, Terephthalsäure
- PA 12/MACMI: Laurinlactam, Dimethyldiaminodicyclohexylmethan, Isophthalsäure
- PA 12/MACMT: Laurinlactam, Dimethyldiaminodicyclohexylmethan, Terephthalsäure
- PA PDA-T: Phenylendiamin, Terephthalsäure
- PA 6T/6I: (siehe PA 6T und PA 6I)
- PA 6T/66: (siehe PA 6T und PA 66)

Komponente A) ist gegebenenfalls ein Blend aus mindestens einem aliphatischen Polyamid und mindestens einem teilaromatischen oder aromatischen Polyamid.

Dabei werden beispielsweise erfindungsgemäß als Komponente A) Mischungen eingesetzt, die Polyamid-6 und Polyamid-6.6 und gegebenenfalls zusätzlich Polyamid-6I/6T enthalten. Dabei wird bevorzugt mit einer Hauptmenge an Polyamid-6.6 gearbeitet. Die Menge an Polyamid-6 beträgt vorzugsweise 5,0 bis 50,0 Gew.-%, besonders bevorzugt 10,0 bis 30,0 Gew.-%, bezogen auf die Menge an Polyamid-6.6. Bei der Mitverwendung von Polyamid-6I/6T beträgt dessen Anteil vorzugsweise 10,0 bis 25,0 Gew.-%, besonders bevorzugt 0 bis 25,0 Gew.-%, bezogen auf die Menge an Polyamid-6.6.

Neben oder anstelle von Polyamid-6I/6T können auch Polyamid-6I oder Polyamid-6T oder Gemische davon eingesetzt werden.

Insbesondere werden erfindungsgemäß Polyamid-6, Polyamid-66 und Copolymere oder Mischungen davon eingesetzt. Bevorzugt besitzt das Polyamid-6 oder Polyamid-66 eine Viskositätszahl von im Bereich von 80 bis 180 ml/g, insbesondere 85 bis 160 ml/g, insbesondere 90 bis 140 ml/g, bestimmt in einer 0,5 gew.-%igen Lösung in 96 gew.-%iger Schwefelsäure bei 25 °C gemäß ISO 307.

Ein geeignetes Polyamid-66 besitzt bevorzugt eine Viskositätszahl im Bereich von 110 bis 170 ml/g, besonders bevorzugt 130 bis 160 ml/g.

Für geeignete teilkristalline und amorphe Polyamide kann ferner auf DE 10 2005 049 297 verwiesen werden. Sie weisen eine Viskositätszahl von 90 bis 210, vorzugsweise 110 bis 160 ml/g auf, bestimmt in einer 0,5 gew.-%igen Lösung in 96 gew.-%iger Schwefelsäure bei 25 °C gemäß ISO 307.

Im Polyamid-6 oder Polyamid-66 können 0 bis 10 Gew.-%, vorzugsweise 0 bis 5 Gew.-%, durch teilaromatische Polyamide ersetzt sein. Besonders bevorzugt werden keine teilaromatischen Polyamide mitverwendet.

### Komponente B)

Als Komponente B) enthalten die thermoplastischen Formmassen 1,0 bis 30,0 Gew.-%, vorzugsweise 2,0 bis 20,0 Gew.-%, besonders bevorzugt 3,0 bis 10,0 Gew.-%, insbesondere 3,5 bis 7,0 Gew.-%, mindestens eines Elastomers.

Komponente B), das Elastomer, ist vorzugsweise ausgewählt aus
b1) Copolymeren von Ethylen mit mindestens einem Comonomer, ausgewählt aus C₃₋₁₂-Olefinen, C₁₋₁₂-Alkyl(meth)acrylaten, (Meth)acrylsäure, Maleinsäureanhydrid, als Komponente B1),
b2) Polyethylen oder Polypropylen als Komponente B2),
wobei Komponenten B1) und B2) auch zusätzlich mit Maleinsäureanhydrid gepfropft sein können.

In Komponente B1) können ein oder mehrere unterschiedliche Comonomere vorliegen, vorzugsweise ein bis drei unterschiedliche Copolymere, besonders bevorzugt ein oder zwei unterschiedliche Comonomere. Die C₃₋₁₂-Olefine sind vorzugsweise endständige, lineare C₃₋₁₂-Olefine, besonders bevorzugt C₃₋₈-Olefine. Beispiele geeigneter Olefine sind Propylen, 1-Buten, 1-Penten, 1-Hexen, 1-Hepten, 1-Octen.

In den C₁₋₁₂-Alkyl(meth)acrylaten liegen C₁₋₁₂-Alkylreste, vorzugsweise C₂₋₆-Alkylreste, vor, wie Methyl-, Ethyl-, Propyl-, Butyl-, Pentyl-, Hexyl-, Ethylhexyl-Reste. Vorzugsweise handelt es sich um eine Alkylacrylate.

In den Copolymeren der Komponente B1) beträgt der Anteil der Ethylen-Grundbausteine vorzugsweise 1 bis 99 Gew.-%, besonders bevorzugt 60 bis 98 Gew.-%, insbesondere bevorzugt 84 bis 96 Gew.-%.

Für die Comonomere gelten die nachstehendend bevorzugten Mengen:

| | |
|---|---|
| C₃₋₁₂-Olefine: | bevorzugt 99 bis 1 Gew.-%, besonders bevorzugt 40 bis 10 Gew.-%, |
| C₁₋₁₂-Alkyl(meth)acrylate: | bevorzugt 40 bis 2 Gew.-%, besonders bevorzugt 30 bis 5 Gew.-%, |
| (Meth)acrylsäure: | bevorzugt 40 bis 2 Gew.-%, besonders bevorzugt 30 bis 5 Gew.-%, |
| Maleinsäureanhydrid: | bevorzugt 3 bis 0,01 Gew.-%, besonders bevorzugt 2 bis 0,1 Gew.-% |

Die gesamte Menge an Comonomeren liegt vorzugsweise im Bereich von 1 bis 99 Gew.-%, besonders bevorzugt 2 bis 40 Gew.-%.

Bei den Copolymeren der Komponente B1) kann es sich um statistische oder um Blockcopolymere handeln. Erstere bestehen aus einem kristallisierenden und damit physikalisch vernetzenden Hauptpolymer (Polyethylen), dessen Kristallisationsgrad durch ein zufällig entlang der Kette eingebautes Comonomer verringert ist, so dass die Kristallite in der fertigen Formmasse keinen direkten Kontakt mehr haben. Sie wirken dann wie in herkömmlichen Elastomeren als isolierte Vernetzungspunkte.

In Blockcopolymeren sind die Hart- und Weichsegmente in einem Molekül scharf getrennt. Bei thermoplastischen Elastomeren entmischt sich unterhalb einer gewissen Temperatur das Material in eine kontinuierliche und eine diskontinuierliche Phase. Sobald Letztere ihre Glastemperatur unterschreitet, wirkt sie wiederum als Vernetzungspunkt.

Das Copolymer der Komponente B1) kann auch zusätzlich mit Maleinsäureanhydrid gepfropft sein. Dabei wird vorzugsweise das für die Pfropfung verwendete Maleinsäureanhydrid in einer Menge von 5 bis 0,005 Gew.-%, besonders bevorzugt 3 bis 0,01 Gew.-%, bezogen auf das Copolymer der Komponente B1) eingesetzt. Vorzugsweise liegt im gepfropften Copolymer der Komponente B1) der Maleinsäureanhydrid-Anteil im Bereich von 2 bis 0,1 Gew.-%, bezogen auf das nichtgepfropfte Copolymer der Komponente B1).

Komponente B1) weist vorzugsweise einen Schmelzflussindex (MVR) (190 °C/2,16 kg, nach ISO1133) Wert von 0,1 bis 20 cm³/10 min auf, besonders bevorzugt wird 0,1 bis 15 cm³/10 min.

Alternativ oder zusätzlich zur Komponente B1) kann als Komponente B2) Polyethylen oder Polypropylen oder ein Gemisch aus beiden eingesetzt werden. Auch diese Komponente B2) kann zusätzlich mit Maleinsäureanhydrid gepfropft sein, wobei der Anteil an Maleinsäureanhydrid, bezogen auf das Polyolefin, 5 bis 0,005 Gew.-%, besonders bevorzugt 2 bis 0,1 Gew.-%, beträgt.

Komponente B2) weist vorzugsweise einen MVR (190 °C/2,16 kg, nach ISO1133) Wert von 0,1 bis 20 cm³/10 min auf, besonders bevorzugt wird 0,1 bis 15 cm³/10 min.

Der Begriff "Elastomer" beschreibt die Komponenten B1) und B2), die gegebenenfalls mit Maleinsäureanhydrid gepfropft sein können. Es kann sich vorzugsweise um thermoplastische Elastomere (TPE) handeln. TPE verhalten sich bei Raumtemperatur vergleichbar den klassischen Elastomeren, lassen sich jedoch unter Wärmezufuhr plastisch verformen und zeigen somit ein thermoplastisches Verhalten.

Es können erfindungsgemäß auch Mischungen der Komponenten B1) und B2) eingesetzt werden. Hierbei handelt es sich insbesondere um Elastomer-Legierungen (Polyblends).

Die thermoplastischen Elastomere sind meist Copolymere, die aus einer "weichen" ElastomerKomponente und einer "harten" thermoplastischen Komponente bestehen. Ihre Eigenschaften liegen damit zwischen denen von Elastomeren und Thermoplasten.

Polyolefin-Elastomere (POE) werden beispielsweise durch Unterverwendung von Metallocen-Katalysatoren polymerisiert, als Beispiele können Ethylen-Propylen-Elastomere (EPR oder EPDM) angeführt werden.

Die häufigsten Polyolefin-Elastomere sind Copolymere von Ethylen und Buten oder Ethylen und Octen.

Für eine weitere Beschreibung der als Komponente B) geeigneten Elastomere kann auch US 5,482,997, US 5,602,200, US 4,174,358 und WO 2005/014278 A1 verwiesen werden.

Beispiele geeigneter Elastomere sind beispielsweise von lyondellbasell unter den Bezeichnungen Lucalen A2540D und Lucalen A2700M erhältlich. Lucalen A2540D ist ein Polyethylen mit niedriger Dichte, das n-Butylacrylat als Comonomer enthält. Es weist eine Dichte von 0,923 g/cm³ und eine Vicat-Erweichungstemperatur von 85 °C bei einem Butylacrylat-Anteil von 6,5 Gew.-% auf.

Lucalen A2700M ist ein Polyethylen mit niedriger Dichte, das ebenfalls ein Butylacrylat-Comonomer enthält. Es weist eine Dichte von 0,924 g/cm³, eine Vicat-Erweichungstemperatur von 60 °C und eine Schmelztemperatur von 95 °C auf.

Das Polymerharz Exxelor^{™} VA 1801 von ExxonMobil ist ein semikristallines Ethylen-Copolymer, das mit Maleinsäureanhydrid durch Reaktivextrusion funktionalisiert ist und eine mittlere Viskosität aufweist. Erst Polymerrückgrat ist vollständig gesättigt. Die Dichte beträgt 0,880 g/cm³ und der Anteil an Maleinsäureanhydrid liegt typischerweise im Bereich von 0,5 bis 1,0 Gew.-%.

Weitere geeignete Komponenten B) sind dem Fachmann bekannt.

### Komponente C)

Als Komponente C) enthalten die erfindungsgemäßen Formmassen 10,0 bis 69,0, vorzugsweise 0,0 bis 55,0 und insbesondere 25,0 bis 45,0 Gew.-%, speziell 30,0 bis 40,0 Gew.-% Glasfasern, welche eine Zugfestigkeit gemäß DIN ISO 527-5 von 86,0 bis 92,0 GPa, ein Zug-E-Modul gemäß DIN ISO 527-5 von 2600 bis 3200 MPa und einen Erweichungspunkt gemäß DIN ISO 7884-1 von 900 bis 950 °C aufweisen, vorzugsweise der Zusammensetzung
C1) 55,5 bis 62,0 Gew.-% SiO₂,
C2) 14,0 bis 18,0 Gew.-% Al₂O₃,
C3) 11,0 bis 16,0 Gew.-% CaO,
C4) 6,0 bis 10,0 Gew.-% MgO,
C5) 0 bis 4,0 Gew.-% weiterer Oxide,
wobei die Summe der Gewichtsprozente C1) bis C5) 100 % beträgt.

Unter weiteren Oxiden C5) sollen Oxide der Elemente Li, Zn, Mn, Le, V, Ti, Be, Sn, Ba, Zr, Sr, Fe, B, Na, K oder deren Mischungen verstanden werden.

Beispielsweise können die Glasfasern bis zu 1, vorzugsweise bis zu 0,5 Gew.-% Li₂O und/oder TiO₂ enthalten.

Fe₂O₃und/oder B₂O₃ können, sofern sie vorliegen, in Mengen von 0,1 bis 3, vorzugsweise 0,2 bis 3 Gew.-% enthalten sein.

Oxide der Elemente Zn, Mn, Le, V, Be, Sn, Ba, Zr, Sn können, sofern sie vorliegen, erfindungsgemäß jeweils in Mengen von 0,05 bis 3 Gew.-%, vorzugsweise von 0,2 bis 1,5 Gew.-% enthalten sein.

Geeignete Mengen für Na₂O und/oder K₂O betragen, sofern sie vorliegen, mindestens 0,2 Gew.-%, bevorzugt 0,3 Gew.-% bis 4 Gew.-%.

Wesentliche bevorzugte Gesichtspunkte der erfindungsgemäßen Glasfaserzusammensetzung sind:
a) das Verhältnis MgO (C4)) : Al₂O₃ (C2)) beträgt vorzugsweise mindestens 1,4 bis maximal 3,0 insbesondere von 1,5 bis 2,8,
b) das Verhältnis MgO (C4)) : CaO (C3)) beträgt vorzugsweise 1,4 bis 2,7 insbesondere von 1,2 bis 2,6.

Die Summen von MgO + CaO und MgO + Al₂O₃ sind insbesondere bevorzugt auf folgende Bereiche beschränkt:
a) 17,0 < MgO + CaO < 24,0 Gew.-%, insbesondere 18,0 < MgO + CaO < 23,0 Gew.-%, und
b) 20,0 < MgO + Al₂O₃ < 26,0 Gew.-%, insbesondere 21,0 < MgO + Al₂O₃ < 25,0 Gew.-%.

Die Herstellung der Glasfasern C) ist in allgemeiner Form der WO 2013/156477 und EP 3 130 633 A1 zu entnehmen. Für weitere Einzelheiten sei auf diese Schrift verwiesen.

Die erfindungsgemäß, vorzugsweise als Schnittglas, eingesetzten Glasfasern weisen einen Durchmesser von vorzugsweise 6 bis 20 µm, bevorzugt von 8 bis 12 µm, insbesondere 10 µm, auf, wobei der Querschnitt der Glasfasern neben rund auch oval oder eckig sein kann.

Die Glasfasern C) können zur besseren Verträglichkeit mit den Thermoplasten mit einer Silanverbindung oberflächlich vorbehandelt sein. Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben:
- X:: NH₂₋, HO-, 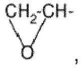
- n:: eine ganze Zahl von 2 bis 10, bevorzugt 3 bis 4,
- m:: eine ganze Zahl von 1 bis 5, bevorzugt 1 bis 2,
- k:: eine ganze Zahl von 1 bis 3, bevorzugt 1.

Bevorzugte Silanverbindungen sind Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.

Andere geeignete Beschichtungsmittel (auch Schlichte genannt) basieren auf Isocyanaten, Phenolharzen oder Acrylsäurederivaten.

### Komponente D)

Als Komponente D) enthalten die erfindungsgemäßen Zusammensetzungen 0 bis 30,0 Gew.-%, vorzugsweise 0 bis 20,0 Gew.-%, insbesondere 0 bis 10,0 Gew.-%, speziell 0 bis 5,0 Gew.-%, weiterer Zusatzstoffe. Bei der Mitverwendung derartiger Zusatzstoffe beträgt die Mindestmenge 0,1 Gew.-%, vorzugsweise 0,5 Gew.-%, insbesondere 0,8 Gew.-%.

Bei Mitverwendung der Komponente D) vermindert sich die Obergrenze der Komponente A) entsprechend. Bei einer Mindestmenge von 0,1 Gew.-% der Komponente D) beträgt so beispielsweise die Obergrenze der Menge der Komponente A) 88,9 Gew.-%.

Als weitere Zusatzstoffe kommen von Komponente C) verschiedene Glasfasern, von Glasfasern verschiedene Füll- und Verstärkungsstoffe, von Komponenten A) und B) verschiedene thermoplastische Polymere oder weitere Additive in Betracht.

Als Komponente D) können die thermoplastischen Formmassen 0 bis 20 Gew.-%, vorzugsweise 0 bis 10 Gew.-%, besonders bevorzugt, 0 bis 5 Gew.-%, von Komponente C) verschiedene Glasfasern enthalten.

Speziell werden als Komponente D) Schnittglasfasern eingesetzt. Insbesondere umfasst die Komponente D Glasfasern, wobei bevorzugt Kurzfasern eingesetzt werden. Diese weisen vorzugsweise eine Länge im Bereich von 2 bis 50 mm und einem Durchmesser von 5 bis 40 µm auf. Alternativ können Endlosfasern (Rovings) eingesetzt werden. Geeignet sind Fasern mit kreisförmiger und/oder nicht-kreisförmiger Querschnittsfläche, wobei im letzteren Fall das Abmessungsverhältnis von der Hauptquerschnittsachse zur Nebenquerschnittsachse insbesondere > 2 ist, bevorzugt im Bereich von 2 bis 8 und besonders bevorzugt im Bereich von 3 bis 5 liegt.

In einer speziellen Ausführung umfasst die Komponente D) sogenannte "flache Glasfasern". Diese weisen speziell eine ovale oder elliptische oder eine mit Einschnürung(en) versehene elliptische (sog. "Kokon"- oder "cocoon"-Faser) oder rechteckige oder nahezu rechteckige Querschnittsfläche auf. Dabei werden Glasfasern mit nicht-kreisförmiger Querschnittsfläche und einem Abmessungsverhältnis von der Hauptquerschnittsachse zur Nebenquerschnittsachse von mehr als 2, bevorzugt von 2 bis 8, insbesondere von 3 bis 5, bevorzugt eingesetzt.

Zur Verstärkung der erfindungsgemäßen Formmassen können auch Mischungen von Glasfasern mit kreisförmigem und nicht-kreisförmigem Querschnitt verwendet werden. In einer speziellen Ausführung überwiegt der Anteil an flachen Glasfasern, wie oben definiert, d. h. sie machen mehr als 50 Gew.-% der Gesamtmasse der Fasern aus.

Wenn als Komponente D) Rovings von Glasfasern eingesetzt werden, weisen diese vorzugsweise einen Durchmesser von 10 bis 20 µm, bevorzugt von 12 bis 18 µm, auf. Dabei kann der Querschnitt der Glasfasern rund, oval, elliptisch, nahezu rechteckig oder rechteckig sein. Besonders bevorzugt werden sogenannte flache Glasfasern mit einem Verhältnis der Querschnittsachsen von 2 bis 5. Insbesondere werden E-Glasfasern verwendet. Es können aber auch alle anderen Glasfasersorten, wie z. B. A-, C-, D-, M-, S-, R-Glasfasern, oder beliebige Mischungen davon oder Mischungen mit E-Glasfasern eingesetzt werden.

Der Begriff "Füllstoff und Verstärkungsstoff" (= mögliche Komponente D)) wird im Rahmen der Erfindung breit verstanden und umfasst partikulare Füllstoffe, von Glasfasern verschiedene Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), nanoskalige Schichtsilikate, nanoskaliges Aluminiumoxid (Al₂O₃), nanoskaliges Titandioxid (TiO₂), Graphen, dauerhaft magnetische bzw. magnetisierbare Metallverbindungen und/oder Legierungen, Schichtsilikate und nanoskaliges Siliciumdioxid (SiO₂), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt ist der Einsatz von Kohlenstofffasern, Aramidfasern, Borfasern, Metallfasern oder Kaliumtitanatfasern.

Vorzugsweise kommen keine von Komponente C) verschiedenen Glasfasern und auch keine sonstigen Füll- und Verstärkungsstoffe zum Einsatz.

Die von Komponente A) und B) verschiedenen thermoplastischen Polymere sind vorzugsweise ausgewählt unter
- Homo- oder Copolymeren, die in einpolymerisierter Form wenigstens ein Monomer enthalten, das ausgewählt ist unter C₂-C₁₀ Monoolefinen, wie beispielsweise Ethylen oder Propylen, 1,3-Butadien, 2-Chlor-1,3-Butadien, Vinylalkohol und dessen C₂-C₁₀-Alkyl-estern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten C₁-C₁₀-Alkoholen, Vinylaromaten, wie beispielsweise Styrol, Acrylnitril, Methacrylnitril, α,β-ethylenisch ungesättigten Mono- und Dicarbonsäuren, und Maleinsäureanhydrid,
- Homo- und Copolymeren von Vinylacetalen,
- Polyvinylestern,
- Polycarbonaten (PC),
- Polyestern, wie Polyalkylenterephthalaten, Polyhydroxyalkanoaten (PHA), Polybutylensuccinaten (PBS), Polybutylensuccinatadipaten (PBSA),
- Polyethern,
- Polyetherketonen,
- thermoplastischen Polyurethanen (TPU),
- Polysulfiden,
- Polysulfonen,
- Polyethersulfonen,
- Cellulosealkylestern,
und Mischungen davon.

Zu nennen sind beispielsweise Polyacrylate mit gleichen oder verschiedenen Alkoholresten aus der Gruppe der C₄-C₈-Alkohole, besonders des Butanols, Hexanols, Octanols und 2-Ethylhexanols, Polymethylmethacrylat (PMMA), Methylmethacrylat-Butylacrylat-Copolymere, AcrylnitrilButadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalkohol (PVAL), Polyvinylacetat (PVA), Polyvinylbutyral (PVB), Polycaprolacton (PCL), Polyhydroxybuttersäure (PHB), Polyhydroxyvaleriansäure (PHV), Polymilchsäure (PLA), Ethylcellulose (EC), Celluloseacetat (CA), Cellulosepropionat (CP) oder Cellulose-Acetat/Butyrat (CAB).

Bevorzugt handelt es sich bei dem in der erfindungsgemäßen Formmasse gegebenenfalls zusätzlich enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Geeignete bevorzugte Additive D) sind Schmiermittel und Wärmestabilisatoren, aber auch Flammschutzmittel, Lichtschutzmittel (UV-Stabilisatoren, UV-Absorber oder UV-Blocker), Farbstoffe und Nukleierungsmittel und gegebenenfalls auch metallische Pigmente, Metallflitter, metallbeschichtete Partikel, Antistatika, Leitfähigkeitsadditive, Entformungsmittel, optische Aufheller, Entschäumer etc.

Als Komponente D) können die erfindungsgemäßen Formmassen vorzugsweise 0,01 bis 3 Gew.-%, besonders bevorzugt 0,02 bis 2 Gew.-%, insbesondere 0,05 bis 1,0 Gew.-% mindestens eines Wärmestabilisators, bezogen auf das Gesamtgewicht der Zusammensetzung, enthalten.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5 Gew.-%, insbesondere 0,005 bis 0,3 Gew.-% und besonders bevorzugt 0,01 bis 0,2 Gew.-%, bezogen auf das Gesamtgewicht der Zusammensetzung.

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt 0,2 bis 1,5 Gew.-%, bezogen auf das Gesamtgewicht der Zusammensetzung.

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt 0,2 bis 1 Gew.-%, bezogen auf das Gesamtgewicht der Zusammensetzung.

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der der Zusammensetzung.

Geeignete Verbindungen D) des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O sowie die zweiwertigen Kupferverbindungen CuCl₂, CuSO₄, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A) zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, Kl, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard^{®} A), Addukte aus Phenylendiamin mit Linolensäure, 4,4'-Bis(α,α-dimethylbenzyl)diphenylamin (Naugard^{®} 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphos-phit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenylphosphit und Tris(2,4-di-tert-butylphenyl)phosphit (Hostanox^{®} PAR24: Handelsprodukt der Firma BASF SE).

Eine bevorzugte Ausführungsform des Wärmestabilisators besteht in der Kombination von organischen Hitzestabilisatoren (insbesondere Hostanox PAR 24 und Irganox 1010), einem Bisphenol A basiertem Epoxid (insbesondere Epikote 1001) und einer Kupferstabilisierung auf Basis von Cul und Kl. Eine kommerziell erhältliche Stabilisatormischung, bestehend aus organischen Stabilisatoren und Epoxiden ist beispielsweise Irgatec^{®} NC66 von BASF SE. Insbesondere bevorzugt wird eine Wärmestabilisierung ausschließlich auf Basis von Cul und Kl. Neben dem Zusatz von Kupfer oder Kupferverbindungen ist die Verwendung weiterer Übergangsmetallverbindungen, insbesondere Metallsalze oder Metalloxide der Gruppe VB, VIB, VIIB oder VIIIB des Periodensystems, möglich oder alternativ auch ausgeschlossen. Darüber hinaus können der erfindungsgemäßen Formmasse bevorzugt keine Übergangsmetalle der Gruppe VB, VIB, VIIB oder VIIIB des Periodensystems, wie z. B. Eisen- oder Stahlpulver, zugesetzt werden, oder nicht.

Die erfindungsgemäßen Formmassen können 0 bis 20,0 Gew.-%, besonders bevorzugt 0 bis 10,0 Gew.-%, bezogen auf das Gesamtgewicht der Zusammensetzung, mindestens eines Flammschutzmittels als Additiv E) enthalten. Wenn die erfindungsgemäßen Formmassen mindestens ein Flammschutzmittel enthalten, so vorzugsweise in einer Menge von 0,01 bis 20 Gew.-%, besonders bevorzugt von 0,1 bis 10 Gew.-%, bezogen auf das Gesamtgewicht der Zusammensetzung. Als Flammschutzmittel kommen halogenhaltige und halogenfreie Flammschutzmittel und deren Synergisten in Frage (siehe auch Gächter/Müller, 3. Ausgabe, 1989, Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim., sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP-A-1 095 030), Ammoniumpolyphosphat, Trishydroxyethylisocyanurat (gegebenenfalls auch Ammoniumpolyphosphat in Mischung mit Trishydroxyethylisocyanurat) (EP-A-058 456 7). Weitere N-haltige oder P-haltige Flammschutzmittel oder als Flammschutzmittel geeignete PN-Kondensate können der DE-A-10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (für Einzelheiten und weitere Flammschutzmittel: siehe DE-A-10 2004 050 025).

Die erfindungsgemäßen thermoplastischen Formmassen können 0 bis 1,5 Gew.-%, bevorzugt 0,05 bis 1,5 Gew.-%, besonders bevorzugt 0,1 bis 1 Gew.-%, eines Schmiermittels enthalten.

Bevorzugt sind Al-, Alkali-, Erdalkalisalze oder Ester oder Amide von Fettsäuren mit 10 bis 44 C-Atomen, vorzugsweise mit 14 bis 44 C-Atomen. Die Metallionen sind vorzugsweise Erdalkali und AI, wobei Ca oder Mg besonders bevorzugt sind. Bevorzugte Metallsalze sind Ca-Stearat und Ca-Montanat sowie Al-Stearat. Es können auch Mischungen verschiedener Salze eingesetzt werden, wobei das Mischungsverhältnis beliebig ist.

Die Carbonsäuren können ein- oder zweiwertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können ein- bis vierwertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können ein- bis dreiwertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Die Herstellung der Polyamid-Formmassen erfolgt nach an sich bekannten Verfahren. Dazu zählt das Mischen der Komponenten in den entsprechenden Gewichtsanteilen.

Es ist auch möglich, Rezyklate der einzelnen Komponenten oder auch von Gemischen, insbesondere der Komponenten A) und B), einzusetzen. Durch Zusatz der Komponente C) können derartige Rezyklate in erfindungsgemäße Formmassen überführt werden.

Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 °C bis 340 °C, besonders bevorzugt von 240 bis 320 °C und speziell von 250 bis 300 °C. Dem Fachmann sind die geeigneten Verfahren bekannt.

### Formkörper

Des Weiteren betrifft die vorliegende Erfindung Formkörper, die unter Verwendung der erfindungsgemäßen Polyamid-Formmassen hergestellt werden.

Die Polyamid-Formmassen können zur Herstellung von Formteilen mittels beliebiger geeigneter Verarbeitungstechniken verwendet werden. Geeignete Verarbeitungstechniken sind insbesondere Spritzgießen, Extrusion, Coextrusion, Tiefziehen oder jede andere bekannte Kunststoff-Formgebungsmethode. Diese und weitere Beispiele sind z. B. in "Einfärben von Kunststoffen", VDI-Verlag, ISBN 3-18-404014-3, zu finden.

Die vorliegende Erfindung betrifft auch ein Verfahren zur Herstellung der erfindungsgemäßen Formmassen, wobei die Komponenten A), B), C) und gegebenenfalls D) in den entsprechenden Mengen vermischt, bevorzugt durch Extrusion, werden. Bei diesem Verfahren können handelsübliche Zweiwellenextruder unterschiedlicher Größe (Wellendurchmesser) eingesetzt werden. Die Temperatur beträgt bei der Extrusion 200 bis 400 °C, bevorzugt 250 bis 350 °C, besonders bevorzugt 250 bis 320 °C.

Die aus den erfindungsgemäßen Formmassen hergestellten Formkörper werden zur Herstellung von Innen- und Außenteilen, vorzugsweise mit tragender oder mechanischer Funktion, im Bereich Elektro, Möbel, Sport, Maschinenbau, Sanitär und Hygiene, Medizin, Energie- und Antriebstechnik, Automobil und anderer Transportmittel oder Gehäusematerial für Geräte und Apparate für die Telekommunikation, Unterhaltungselektronik, Haushaltsapparate, Maschinenbau, im Heizungsbereich oder für Befestigungsteile für Installationen oder für Behälter und Lüftungsteile aller Art eingesetzt.

Die Mechanik, insbesondere die Schlagzähigkeit der erfindungsgemäßen Formteile, ist deutlich höher, wobei gleichzeitig eine bessere Schwindung gegeben ist.

### Verarbeitungsverfahren

Neben den üblichen Verarbeitungsverfahren, wie Extrusion oder Spritzguss, kommen auch folgende Verarbeitungsverfahren in Frage:
- CoBi-Injektion oder Montagespritzguss für Hybridteile, bei denen die erfindungsgemäße Polyester-Formmasse mit anderen kompatiblen oder inkompatiblen Werkstoffen, wie z. B. Thermoplasten, Duroplasten oder Elastomeren, kombiniert wird;
- Insert-Teile, wie z. B. Lagerstellen oder Gewindeeinsätze aus der erfindungsgemäßen Polyester-Formmasse, umspritzt mit anderen kompatiblen oder inkompatiblen Werkstoffen, wie z. B. Thermoplasten, Duroplasten oder Elastomeren;
- Outsert-Teile, wie Rahmen, Gehäuse oder Stützen aus der erfindungsgemäßen Polyamid-Formmasse, in welche Funktionselemente aus anderen kompatiblen oderinkompatiblen Werkstoffen, wie z. B. Thermoplasten, Duroplasten oder Elastomeren, eingespritzt werden;
- Hybridteile (Elemente aus der erfindungsgemäßen Polyamid-Formmasse kombiniert mit anderen kompatiblen oder inkompatiblen Werkstoffen, wie z. B. Thermoplasten, Duroplasten oder Elastomeren) hergestellt durch Verbundspritzguss, Spritzschweißen. Montagespritzguss, Ultraschall-, Reib- oder Laserschweißen, Kleben, Bördeln oder Nieten;
- Halbzeuge und Profile (z. B. hergestellt durch Extrusion, Pultrusion, Schichtung oder Lamination);
- Oberflächenbeschichtung, Kaschierungen, chemisches- oder physikalisches Metallisieren, Beflockung, wobei die erfindungsgemäße Polyamid-Formmasse das Substrat selbst oder der Substratträger oder bei Hybrid/Bi-Injektionsteilen ein definierter Substratbereich sein kann, welcher auch durch nachträgliche chemische (z. B. Ätzen) oder physikalische Behandlung (z. B. spanabhebend oder Laserabtrag) zur Oberfläche gebracht werden kann;
- Bedrucken, Transferdruck, 3D-Druck, Laserbeschriften.

Die folgenden Beispiele dienen der Verdeutlichung der Erfindung, ohne sie in irgendeiner Weise zu beschränken.

### Beispiele

Die folgenden Einsatzstoffe wurden verwendet:

| | |
|---|---|
| Polyamid-6: | Ultramid^{®} B27 der BASF SE, Schmelzpunkt: 220 °C, Viskositätszahl (0,5 % in 96 % H₂SO₄): 150 ml/g, Amino-Endgruppen: 37 mmol/kg |
| Polyamid-6.6: | Ultramid^{®} A27 der BASF SE, Viskositätszahl (0,5 % in 96 % H₂SO₄): 150 ml/g, Schmelzpunkt: 264 °C, Amino-Endgruppen: 48 mmol/kg |
| Elastomer: | Ethylen-Propylen-Elastomer, mit Maleinsäureanhydrid gepfropft, Exxelor^{™} VA 1801 von ExxonMobil Petroleum & Chemical BVBA, Dichte: 0,88 g/ml, Schmelzflussindex (230 °C/10 kg; ISO1133): 9 g/10 min, Glasübergangstemperatur: -44 °C |
| ECR-Glasfaser: | Standard-E-Glas NEG ChopVantage 3610HP; Durchmesser: 10 µm |
| Hochfeste Glasfaser: | Zusammensetzung: SiO₂: 60,8 Gew.-%, Al₂O₃: 15,2 Gew.-%, MgO: 6,8 Gew.-%, CaO: 15,5 Gew.-%, Na₂O: 0,8 Gew.-%; behandelt mit für Anbindung an PA geeigneter Silanschlichte; Durchmesser: 10 µm |
| Stabilisator: | Irganox^{®} 1098 von BASF SE |
| Schmiermittel: | Ethylenbisstearamid (EBS) von Lonza Cologne GmbH |
| Ruß: | Printex 60 von Orion Engineered Carbons |

Die Formmassen wurden durch Vermischen der nachfolgend aufgeführten Inhaltsstoffe in einem Zweischneckenextruder ZE 25 A UTXi bei Temperaturen von 260 °C hergestellt. Die in den nachstehenden Tabellen 1 und 2 angegebenen Eigenschaften wurden nach den angegebenen Normen, gültig 2019, bestimmt. Die Anteile der Inhaltsstoffe sind in Gew.-% angegeben.

**Tabelle 1**

| Zusammensetzung | | | | Vergleich 1 | Vergleich 2 | Beispiel 1 | Beispiel 2 | Vergleich 3 |
|---|---|---|---|---|---|---|---|---|
| Polyamid-6 | | | | 57,1 | 60,6 | 57,1 | 60,6 | 64,1 |
| ECR-Glasfaser | | | | 35 | 35 | 0 | 0 | 0 |
| Hochfeste Glasfaser | | | | 0 | 0 | 35 | 35 | 35 |
| Elastomer | | | | 7 | 3,5 | 7 | 3,5 | 0 |
| Stabilisator | | | | 0,2 | 0,2 | 0,2 | 0,2 | 0,2 |
| Ruß | | | | 0,5 | 0,5 | 0,5 | 0,5 | 0,5 |
| Schmiermittel | | | | 0,2 | 0,2 | 0,2 | 0,2 | 0,2 |
| | Einheit | DIN | ISO | | | | | |

| Produktmerkmale | | | | | | | | |
|---|---|---|---|---|---|---|---|---|
| Dichte | g/cm3 | 53479 | 1183 | 1,38 | 1,39 | 1,38 | 1,39 | 1,41 |

| Mechanische Eigenschaften (trocken) | | | | | | | | |
|---|---|---|---|---|---|---|---|---|
| Zug-E-Modul | MPa | | 527 | 10209 | 10621 | 10812 | 11368 | 11818 |
| Bruchspannung | MPa | | 527 | 159 | 171 | 176 | 191 | 205 |
| Bruchdehnung | % | | 527 | 4,6 | 3,8 | 6,0 | 4,9 | 3,9 |
| Charpy Schlagzähigkeit | kJ/m² | | 179-2/ 1eU | 102 | 97 | 121 | 115 | 108 |
| Charpy Kerbschlagzähigkeit | kJ/m² | | 179-2/ 1eAf | 18,5 | 15,5 | 21,8 | 17,8 | 14,7 |

**Tabelle 2**

| Zusammensetzung | | | | Vergleich 1 | Vergleich 2 | Beispiel 1 | Beispiel 2 | Vergleich 3 |
|---|---|---|---|---|---|---|---|---|
| PA 6.6 | | | | 59,1 | 64,1 | 59,1 | 64,1 | 69,1 |
| ECR-Glasfaser | | | | 30 | 30 | 0 | 0 | 0 |
| Hochfeste Glasfaser | | | | 0 | 0 | 30 | 30 | 30 |
| Elastomer | | | | 10 | 5 | 10 | 5 | 0 |
| Stabilisator | | | | 0,2 | 0,2 | 0,2 | 0,2 | 0,2 |
| Ruß | | | | 0,5 | 0,5 | 0,5 | 0,5 | 0,5 |
| Schmiermittel | | | | 0,2 | 0,2 | 0,2 | 0,2 | 0,2 |
| | Einheit | DIN | ISO | | | | | |

| Produktmerkmale | | | | | | | | |
|---|---|---|---|---|---|---|---|---|
| Dichte | g/cm3 | 53479 | 1183 | 1,33 | 1,34 | 1,33 | 1,34 | 1,36 |

| Mechanische Eigenschaften (trocken) | | | | | | | | |
|---|---|---|---|---|---|---|---|---|
| Zug-E-Modul | MPa | | 527 | 8613 | 9213 | 9221 | 9912 | 10526 |
| Bruchspannung | MPa | | 527 | 137 | 165 | 150 | 181 | 208 |
| Bruchdehnung | % | | 527 | 3,6 | 3,5 | 4,1 | 3,9 | 3,8 |
| Charpy Schlagzähigkeit | kJ/m² | | 179-2/1eU | 92 | 81 | 118 | 105 | 93 |
| Charpy Kerbschlagzähigkeit | kJ/m² | | 179-2/1eAf | 15,2 | 11,4 | 19,5 | 15,0 | 10,5 |

## Patentansprüche

1. Verwendung von Glasfasern, welche eine Zugfestigkeit gemäß DIN ISO 527-5 von 86,0 bis 92,0 GPa, ein Zug-E-Modul gemäß DIN ISO 527-5 von 2600 bis 3200 MPa und einen Erweichungspunkt gemäß DIN ISO 7884-1 von 900 bis 950 °C aufweisen, zur Erhöhung der Schlagzähigkeit und/oder Bruchdehnung von Formkörpern aus thermoplastische Polyamide und Elastomere enthaltenden Formmassen.

2. Verwendung nach Anspruch 1, **dadurch gekennzeichnet, dass** Glasfasern der Zusammensetzung
C1) 55,5 bis 62,0 Gew.-% SiO₂,
C2) 14,0 bis 18,0 Gew.-% Al₂O₃,
C3) 11,0 bis 16,0 Gew.-% CaO,
C4) 6,0 bis 10,0 Gew.-% MgO,
C5) 0 bis 4,0 Gew.-% weiterer Oxide
eingesetzt werden,
wobei die Summe der Anteile aus C3) CaO und C4) MgO zwischen 17,0 und 24,0 Gew.-% liegt und die Summe der Gewichtsprozente C1) bis C5) 100 Gew.-% beträgt.

3. Verwendung nach Anspruch 1 oder 2, **dadurch gekennzeichnet, dass** die thermoplastischen Formmassen mindestens ein Elastomer enthalten, ausgewählt aus
b1) Copolymeren von Ethylen mit mindestens einem Comonomer, ausgewählt aus C₃₋₁₂-Olefinen, C₁₋₁₂-Alkyl(meth)acrylaten, (Meth)acrylsäure, Maleinsäureanhydrid, als Komponente B1),
b2) Polyethylen oder Polypropylen als Komponente B2),
wobei Komponenten B1) und B2) auch zusätzlich mit Maleinsäureanhydrid gepfropft sein können.

4. Thermoplastische Formmasse, enthaltend
a) 30,0 bis 89,0 Gew.-% mindestens eines thermoplastischen Polyamids als Komponente A),
b) 1,0 bis 30,0 Gew.-% mindestens eines Elastomers als Komponente B), ausgewählt aus
b1) Copolymeren von Ethylen mit mindestens einem Comonomer, ausgewählt aus C₃₋₁₂-Olefinen, C₁₋₁₂-Alkyl(meth)acrylaten, (Meth)acrylsäure, Maleinsäureanhydrid, als Komponente B1),
b2) Polyethylen oder Polypropylen als Komponente B2),
wobei Komponenten B1) und B2) auch zusätzlich mit Maleinsäureanhydrid gepfropft sein können,
c) 10,0 bis 69,0 Gew.-% Glasfasern, welche eine Zugfestigkeit gemäß DIN ISO 527-5 von 86,0 bis 92,0 GPa, ein Zug-E-Modul gemäß DIN ISO 527-5 von 2600 bis 3200 MPa und einen Erweichungspunkt gemäß DIN ISO 7884-1 von 900 bis 950 °C aufweisen, als Komponente C),
d) 0 bis 30,0 Gew.-% weiterer Zusatzstoffe und Verarbeitungshilfsmittel als Komponente D),
wobei die Summe der Gewichtsprozente der Komponenten A) bis D) 100 Gew.-% ergibt.

5. Formmasse nach Anspruch 4, **dadurch gekennzeichnet, dass** eine Komponente C) der Zusammensetzung
C1) 55,5 bis 62,0 Gew.-% SiO₂,
C2) 14,0 bis 18,0 Gew.-% Al₂O₃,
C3) 11,0 bis 16,0 Gew.-% CaO,
C4) 6,0 bis 10,0 Gew.-% MgO,
C5) 0 bis 4,0 Gew.-% weiterer Oxide
eingesetzt wird,
wobei die Summe der Anteile aus C3) CaO und C4) MgO zwischen 17,0 und 24,0 Gew.-% liegt, und die Summe der Gewichtsprozente C1) bis C5) 100 Gew.-% beträgt.

6. Formmasse nach Anspruch 4 oder 5, **dadurch gekennzeichnet, dass** Komponente D) Wärmestabilisatoren, Ruß und Schmiermittel umfasst.

7. Formmasse nach einem der Ansprüche 4 bis 6, **dadurch gekennzeichnet, dass** Komponente B) in einer Menge von 2,0 bis 20,0 Gew.-%, vorzugsweise 3,0 bis 10,0 Gew.-%, besonders bevorzugt 3,5 bis 7,0 Gew.-%, eingesetzt wird.

8. Thermoplastische Formmasse nach einem der Ansprüche 4 bis 7, **dadurch gekennzeichnet, dass** Komponente A) ausgewählt ist aus Polyamid-6, Polyamid-66, Polyamid-6.10 und Copolymeren oder Mischungen davon.

9. Formmasse nach einem der Ansprüche 4 bis 8, **dadurch gekennzeichnet, dass** Komponente C) in einer Menge von 10,0 bis 55,0 Gew.-%, bevorzugt von 15,0 bis 50,0 Gew.-%, vorzugsweise 25,0 bis 40,0 Gew.-%, eingesetzt wird.

10. Formmasse nach einem der Ansprüche 4 bis 9, **dadurch gekennzeichnet, dass** sie Komponente B1) enthält, in der das mindestens eine Comonomer ausgewählt ist aus C₃₋₈-Olefinen, C₂₋₆-Alkylacrylaten, Maleinsäureanhydrid.

11. Formmasse nach einem der Ansprüche 4 bis 10, **dadurch gekennzeichnet, dass** sie die mit Maleinsäureanhydrid gepfropfte Komponente B1) und/oder B2) enthält.

12. Verfahren zur Herstellung einer thermoplastischen Formmasse nach einem der Ansprüche 4 bis 11 durch Vermischen der Komponenten A) bis C) und gegebenenfalls D).

13. Verwendung der thermoplastischen Formmasse nach einem der Ansprüche 4 bis 11 zur Herstellung von Fasern, Folien und Formkörpern.

14. Fasern, Folien oder Formkörper aus einer thermoplastischen Formmasse nach einem der Ansprüche 4 bis 11.

15. Verfahren zur Herstellung von Fasern, Folien oder Formkörpern nach Anspruch 14 durch Extrusion, Spritzgießen oder Blasformen der thermoplastischen Formmasse nach einem der Ansprüche 4 bis 11.

## Claims

1. The use of glass fibers having a tensile strength according to DIN ISO 527-5 of 86.0 to 92.0 GPa, a tensile elastic modulus according to DIN ISO 527-5 of 2600 to 3200 MPa and a softening point according to DIN ISO 7884-1 of 900°C to 950°C to increase the impact strength and/or breaking elongation of molded articles made of molding materials comprising thermoplastic polyamides and elastomers.

2. The use according to claim 1, wherein glass fibers having the composition
C1) 55.5% to 62.0% by weight of SiO₂,
C2) 14.0% to 18.0% by weight of Al₂O₃,
C3) 11.0% to 16.0% by weight of CaO,
C4) 6.0% to 10.0% by weight of MgO,
C5) 0% to 4.0% by weight of further oxides
are employed,
wherein the proportions of C3) CaO and C4) MgO sum to between 17.0% and 24.0% by weight and the percentages by weight of C1) to C5) sum to 100% by weight.

3. The use according to claim 1 or 2, wherein the thermoplastic molding materials comprise at least one elastomer selected from
b1) copolymers of ethylene with at least one comonomer selected from C₃₋₁₂-olefins, C₁₋₁₂-alkyl (meth)acrylates, (meth)acrylic acid and maleic anhydride as component B1),
b2) polyethylene or polypropylene as component B2), wherein components B1) and B2) may also be additionally grafted with maleic anhydride.

4. A thermoplastic molding material comprising
a) 30.0% to 89.0% by weight of at least one thermoplastic polyamide as component A),
b) 1.0% to 30.0% by weight of at least one elastomer as component B), selected from
b1) copolymers of ethylene with at least one comonomer selected from C₃₋₁₂-olefins, C₁₋₁₂-alkyl (meth)acrylates, (meth)acrylic acid and maleic anhydride as component B1),
b2) polyethylene or polypropylene as component B2),
wherein components B1) and B2) may also be additionally grafted with maleic anhydride,
c) 10.0% to 69.0% by weight of glass fibers having a tensile strength according to DIN ISO 527-5 of 86.0 to 92.0 GPa, a tensile elastic modulus according to DIN ISO 527-5 of 2600 to 3200 MPa and a softening point according to DIN ISO 7884-1 of 900°C to 950°C as component C),
d) 0% to 30.0% by weight of further additives and processing aids as component D),
wherein the percentages by weight of the components A) to D) sum to 100% by weight.

5. The molding material according to claim 4, wherein a component C) having the composition
C1) 55.5% to 62.0% by weight of SiO₂,
C2) 14.0% to 18.0% by weight of Al₂O₃,
C3) 11.0% to 16.0% by weight of CaO,
C4) 6.0% to 10.0% by weight of MgO,
C5) 0% to 4.0% by weight of further oxides
is employed,
wherein the proportions of C3) CaO and C4) MgO sum to between 17.0% and 24.0% by weight, and the percentages by weight of C1) to C5) sum to 100% by weight.

6. The molding material according to claim 4 or 5, wherein component D) comprises heat stabilizers, carbon black and lubricants.

7. The molding material according to any of claims 4 to 6, wherein component B) is employed in an amount of 2.0% to 20.0% by weight, preferably 3.0% to 10.0% by weight, particularly preferably 3.5% to 7.0% by weight.

8. The thermoplastic molding material according to any of claims 4 to 7, wherein component A) is selected from polyamide 6, polyamide 66, polyamide 6.10 and copolymers or mixtures thereof.

9. The molding material according to any of claims 4 to 8, wherein component C) is employed in an amount of 10.0% to 55.0% by weight, by preference of 15.0% to 50.0% by weight, preferably 25.0% to 40.0% by weight.

10. The molding material according to any of claims 4 to 9, which comprises component B1) in which the at least one comonomer is selected from C₃₋₈-olefins, C₂₋₆-alkyl acrylates, maleic anhydride.

11. The molding material according to any of claims 4 to 10, which comprises the component B1) and/or B2) grafted with maleic anhydride.

12. A process for producing a thermoplastic molding material according to any of claims 4 to 11 by mixing the components A) to C) and optionally D).

13. The use of the thermoplastic molding material according to any of claims 4 to 11 for producing fibers, films and molded articles.

14. A fiber, film or molded article made of a thermoplastic molding material according to any of claims 4 to 11.

15. A process for producing fibers, films or molded articles according to claim 14 by extrusion, injection molding or blow molding of the thermoplastic molding material according to any of claims 4 to 11.

## Revendications

1. Utilisation de fibres de verre qui présentent une résistance à la traction selon la norme DIN ISO 527-5 de 86,0 à 92,0 GPa, un module E en traction selon la norme DIN ISO 527-5 de 2600 à 3200 MPa et un point de ramollissement selon la norme DIN ISO 7884-1 de 900 à 950°C, pour augmenter la résistance aux chocs et/ou l'allongement à la rupture de corps moulés en masses de moulage contenant des polyamides thermoplastiques et des élastomères.

2. Utilisation selon la revendication 1, **caractérisée en ce qu'**on utilise des fibres de verre présentant la composition
C1) 55,5 à 62,0% en poids de SiO₂,
C2) 14,0 à 18,0% en poids d'Al₂O₃,
C3) 11,0 à 16,0% en poids de CaO,
C4) 6,0 à 10,0% en poids de MgO,
C5) 0 à 4,0% en poids d'autres oxydes,
la somme des proportions de C3) CaO et de C4) MgO étant située entre 17,0 et 24,0% en poids et la somme des pourcentages en poids de C1) à C5) valant 100% en poids.

3. Utilisation selon la revendication 1 ou 2, **caractérisée en ce que** les masses de moulage thermoplastiques contiennent au moins un élastomère, choisi parmi
b1) les copolymères d'éthylène et d'au moins un comonomère choisi parmi les C₃₋₁₂-oléfines, les (méth) acrylates de C₁₋₁₂-alkyle, l'acide (méth)acrylique, l'anhydride de l'acide maléique, en tant que composant B1),
b2) le polyéthylène ou le polypropylène en tant que composant B2),
les composants B1) et B2) pouvant en outre également être greffés par de l'anhydride de l'acide maléique.

4. Masse de moulage thermoplastique, contenant
a) 30,0 à 89,0% en poids d'au moins un polyamide thermoplastique en tant que composant A),
b) 1,0 à 30,0% en poids d'au moins un élastomère en tant que composant B), choisi parmi
b1) les copolymères d'éthylène et d'au moins un comonomère choisi parmi les C₃₋₁₂-oléfines, les (méth) acrylates de C₁₋₁₂-alkyle, l'acide (méth)acrylique, l'anhydride de l'acide maléique, en tant que composant B1),
b2) le polyéthylène ou le polypropylène en tant que composant B2),
les composants B1) et B2) pouvant en outre également être greffés par de l'anhydride de l'acide maléique,
c) 10,0 à 69,0% en poids de fibres de verre qui présentent une résistance à la traction selon la norme DIN ISO 527-5 de 86,0 à 92,0 GPa, un module E en traction selon la norme DIN ISO 527-5 de 2600 à 3200 MPa et un point de ramollissement selon la norme DIN ISO 7884-1 de 900 à 950°C, en tant que composant C),
d) 0 à 30,0% en poids d'autres additifs et adjuvants de mise en œuvre en tant que composant D),
la somme des pourcentages en poids des composants A) à D) valant 100%.

5. Masse de moulage selon la revendication 4, **caractérisée en ce qu'**on utilise un composant C) présentant la composition
C1) 55,5 à 62,0% en poids de SiO₂,
C2) 14,0 à 18,0% en poids d'Al₂O₃,
C3) 11,0 à 16,0% en poids de CaO,
C4) 6,0 à 10,0% en poids de MgO,
C5) 0 à 4,0% en poids d'autres oxydes,
la somme des proportions de C3) CaO et de C4) MgO étant située entre 17,0 et 24,0% en poids et la somme des pourcentages en poids de C1) à C5) valant 100% en poids.

6. Masse de moulage selon la revendication 4 ou 5, **caractérisée en ce que** le composant D) comprend des stabilisants thermiques, de la suie et des lubrifiants.

7. Masse de moulage selon l'une quelconque des revendications 4 à 6, **caractérisée en ce que** le composant B) est utilisé en une quantité de 2,0 à 20,0% en poids, de préférence de 3,0 à 10,0% en poids, de manière particulièrement préférée de 3,5 à 7,0% en poids.

8. Masse de moulage thermoplastique selon l'une quelconque des revendications 4 à 7, **caractérisée en ce que** le composant A) est choisi parmi le polyamide-6, le polyamide-66, le polyamide-6.10 et leurs copolymères ou mélanges.

9. Masse de moulage selon l'une quelconque des revendications 4 à 8, **caractérisée en ce que** le composant C) est utilisé en une quantité de 10,0 à 55,0% en poids, de préférence de 15,0 à 50,0% en poids, de préférence de 25,0 à 40,0% en poids.

10. Masse de moulage selon l'une quelconque des revendications 4 à 9, **caractérisée en ce qu'**elle contient le composant B1) dans lequel ledit au moins un comonomère est choisi parmi les C₃₋₈-oléfines, les acrylates de C₂₋₆-alkyle, l'anhydride de l'acide maléique.

11. Masse de moulage selon l'une quelconque des revendications 4 à 10, **caractérisée en ce qu'**elle contient le composant B1 et/ou B2 greffé par de l'anhydride de l'acide maléique.

12. Procédé pour la préparation d'une masse de moulage thermoplastique selon l'une quelconque des revendications 4 à 11 par mélange des composants A) à C) et le cas échéant D).

13. Utilisation de la masse de moulage thermoplastique selon l'une quelconque des revendications 4 à 11 pour la fabrication de fibres, de feuilles et de corps moulés.

14. Fibres, feuilles ou corps moulés en une masse de moulage thermoplastique selon l'une quelconque des revendications 4 à 11.

15. Procédé pour la fabrication de fibres, de feuilles ou de corps moulés selon la revendication 14 par extrusion, moulage par injection ou moulage-soufflage de la masse de moulage thermoplastique selon l'une quelconque des revendications 4 à 11.
